# EUROPEAN PATENT SPECIFICATION

(11) **EP 0 878 085 B1**
(45) Date of publication and mention of the grant of the patent: **26.05.2004**
(21) Application number: 97901199.6
(22) Date of filing: 27.01.1997
(51) Int. Cl.: H04M 3/50, G06F 17/30, G10L 13/00

(54) **DATABASE ACCESS**
DATENBANKZUGRIFF
ACCES A DES BASES DE DONNEES

(30) Priority: 31.01.1996 GB 9601925
(43) Date of publication of application: 18.11.1998
(73) Proprietor: BRITISH TELECOMMUNICATIONS public limited company, London EC1A 7AJ (GB)
(72) Inventor: ATTWATER, David, John, Ipswich IP3 8BG (GB); OLSEN, Paul, Andrew, Suffolk IP4 2RN (GB); BRIDGEMAN, Seamus, Aodhain, Merrion House Merrion Road Dublin 4 (IE); WHITTAKER, Steven, John, Suffolk IP4 4LP (GB)
(74) Representative: Semos, Robert Ernest Vickers
(86) International application number: PCT/GB1997/000233
(87) International publication number: WO 1997/028634

(56) References cited:
- WO-A-94/14270
- BT TECHNOLOGY JOURNAL, vol. 14, no. 1, January 1996, IPSWICH SUFFOLK (GB), pages 177-186, XP000579339 D.J.ATTWATER ET AL: "ISSUES IN LARGE-VOCABULARY INTERACTIVE SPEECH SYSTEMS"

## Description

The present invention relates to a database access particularly, though not exclusively, employing speech recognition input and synthesised speech output.

International patent publication number WO94/14270 describes a mechanised directory enquiry system in which a caller is first prompted to speak the name of the city required. The word spoken is then recognised and the word with the highest confidence level is selected as being the word spoken by a user. The caller is then prompted to speak the name of the sought party. When a satisfactory confidence level is obtained, a database is accessed and the number articulated to the caller. If the confidence level fails to meet a preferred confidence level, the caller is prompted to spell all or part of the location or the name. If more than one match between the spoken input and the database is found, the user is asked to confirm each match one by one until a confirmed match is found. If no such match can be located, the automatic processing is terminated.

European patent application publication no. 433964 relates to a system which uses a text input. First of all an input word representing the surname is matched with the entries. If a match is found that is "comparable" but not exactly the same as the input, the initial characters of the input and the database entry are compared. If these match, a record of the data entry is made. The system then compares the required titles and the personal names required. The most likely entry is provided to the user.

US patent no. 5204894 relates to a personal electronic directory in which the names of the entries are stored in the user's voice and associated numbers are input using either a multitone (DTMF) telephone keypad or a spoken input. When a user needs to access the directory, the user speaks the required name and the directory system compares the first word of the input with the stored words and provides all possibilities in sequence to the user until the user confirms one.

In all of the prior art systems discussed above, the systems provide to the user identified entries in a database in a sequential manner until a user confirms the data entry as being that required.

According to one aspect of the present invention there is provided a database access apparatus comprising:
(a) a database containing entries each comprising a plurality of fields which contain machine representations of items of information pertaining to the entry, the said representations forming a first vocabulary;
(b) announcement means responsive to machine representations falling within a second vocabulary of such representations to generate audio signals representing spoken announcements;
(c) input means operable to receive signals and to produce machine representations thereof falling within a third vocabulary of such representations; characterised by further comprising:
(d) translation means defining a relationship between the first vocabulary and the second vocabulary and between the first vocabulary and the third vocabulary; and
(e) control means operable
   (i) to generate, in accordance with the defined relationship, for each representation produced by the input means, one or more representations according to the first vocabulary;
   (ii) to identify database entries containing the generated representations;
   (iii) to examine each representation or combination of representations which is contained in a selected field or combination of fields of the identified entries to identify distinguishable one(s) of those representations or combinations, a distinguishable representation or combination being one which, when translated in accordance with the defined relationship into representations of the second vocabulary, differs from every other such distinguishable representation or combination when similarly translated; and
   (iv) to control the announcement means to generate an announcement including at least one word or combination of words which correspond(s) to one of the distinguishable representations or combinations.

The included word output by the announcement means may be in any suitable form e.g. the included word may represent a whole word, a spelt word or alphanumerics.

In another aspect the invention provides a method of accessing a database system, said database system comprising a database containing entries each comprising a plurality of fields which contain machine representations of items of information pertaining to the entry, the said representations forming a first vocabulary; announcement means responsive to machine representations falling within a second vocabulary of such representations to generate audio signals representing spoken announcements; and input means operable to receive signals and to produce machine representations falling within a third vocabulary of such representations;
the method of accessing the database system being characterised by comprising:
(i) generating, in accordance with a defined relationship between the first vocabulary and the third vocabulary, for each representation produced by the input means, one or more representations according to the first vocabulary;
(ii) identifying database entries containing the generated representations;
(iii) examining each representation or combination of representations which is contained in a selected field or combination of fields of the identified entries to identify distinguishable one(s) of those representations or combinations, a distinguishable representation or combination being one which, when translated in accordance with the defined relationship into representations of the second vocabulary, differs from every other such distinguishable representation or combination when similarly translated; and
(iv) controlling the announcement means to generate an announcement including at least one word or combination of words which correspond(s) to one of the distinguishable representations or combinations.

Some embodiments of the present invention will now be described, by way of example, with reference to the accompanying drawings in which:
Figure 1 is an Entity Relationship Diagram showing an example of translations between phonetic, spoken and database representations;
Figure 2 is a block diagram of apparatus according to the invention;
Figure 3 is a flow chart illustrating the operation of the apparatus of Fig. 1;
Figure 3a is a flow chart illustrating an alternative operation of the apparatus of Figure 1;
Figure 4 is a flow chart illustrating the process of identifying distinguishable tuples;
Figure 5 is an Entity Relationship Diagram showing an example of the translations between phonetic,spoken,spelt and database representations.

A voice interactive apparatus will be described, which generates questions to a user and recognises the user's responses in order to access the contents of the database. A database of names, addresses and telephone numbers, as might be used for an automated telephone directory enquiry system, will be used as an example. Firstly, however, some basic concepts will be discussed which will be of value in understanding the operation of the apparatus.

The database will be supposed to contain a number of entries, with each entry containing a number of fields each containing an item of information about the entry; for example the forename, surname, location and telephone number of the person to whom the entry refers. A set of fields from one entry is here referred to as a tuple, viz. a combination of N fields (when N = 1, 2 or 3 the terms single, duple and triple respectively are used). A complete entry is thus a tuple as also is a smaller set of fields extracted from one entry; thus a set of forename/surname pairs taken from the example database forms a set of extracted duples.

The items of information stored in the database fields may be in any convenient representation; generally this description will assume the use of a text representation such as, for the surname Jonson, character codes corresponding to the letters of the name, but with a stylised representation for some fields; for example one might, for geographical locations, identify several distinct places having the same name with different representations - e.g. Southend1, Southend2 and Southend3 for three place in England called Southend.

The words used in the dialogue between the apparatus and the user to represent field contents are conceptually distinct from the database representations and represent for each field a spoken vocabulary. If the database representations are text then there will be some overlap between them and the spoken vocabulary, but even then it may be desired to take account of the fact that the user might use, to describe an item of information, a different word from that actually contained in the database field; that is, some words may be regarded as synonyms.

Finally one needs also to note that more than one pronunciation may be associated with a word (homonyms), and conversely more than one word may have the same pronunciation (homophones).

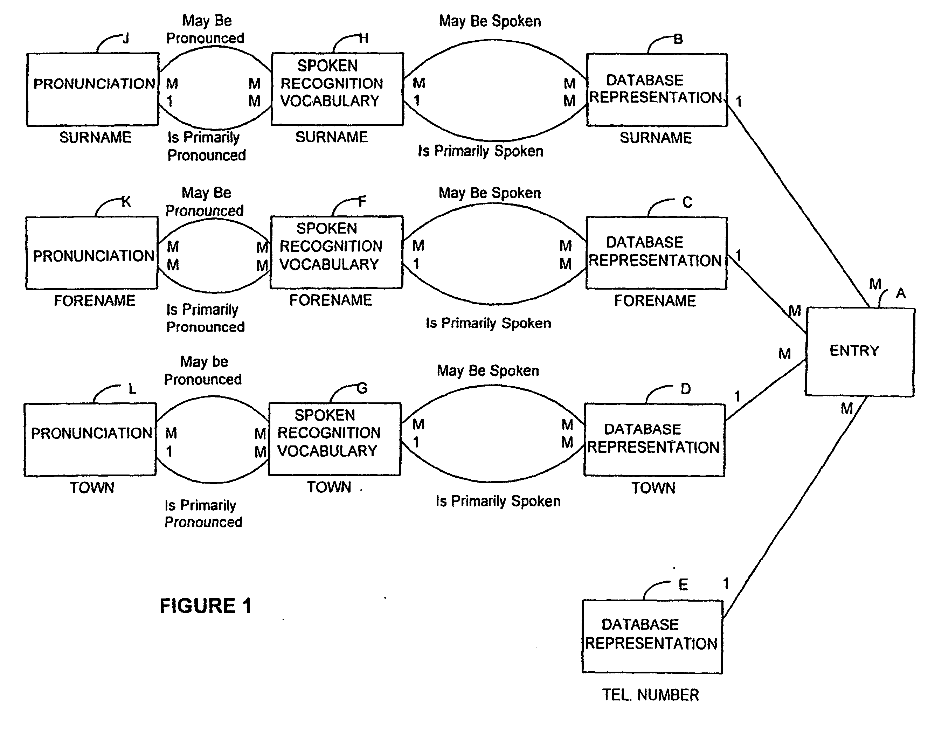

These concepts are illustrated in Figure 1 which is an "Entity Relationship Diagram", where we see a need for translation between representations as one moves from left to right or right to left. Box A represents a set of database entries. Box B represents a set of unique surnames, which have a 1:many relationship with the entries -i.e. one surname may appear in many entries but one entry will contain only one surname. Boxes C, D and E correspond to sets of representations of forenames, towns and telephone numbers, where similar comments apply. Box F represents the spoken vocabulary corresponding to forenames i.e. the set of all words that are permitted by the apparatus to be used to describe this field. This can differ from the database vocabulary (or, even if it is the same, may not have a 1:1 correspondence with it) to take account of aliases such as synonyms, for example an abbreviated form of a forename such as Andy or Jim may be considered to have the same meaning as the full forms of Andrew and James. Two connecting paths are shown between boxes C and F, corresponding to a preferred form for the spoken vocabulary word and to alternative forms which "may possibly" be used.

Similarly, Box G represents the spoken vocabulary corresponding to town names. Here again the possibility of aliasing arises since often a large town may contain smaller places or districts within it. For example, Ipswich is a town in the county of Suffolk, England. Nearby is a small district called Kesgrave. A person living in Kesgrave might have his address recorded in the database either as Ipswich or as Kesgrave. Similarly an enquirer seeking the telephone number of such a person might give either name as the location. Thus Ipswich and Kesgrave may be regarded as synonymous for the purposes of database retrieval. Note however that this geographical aliasing is complex: Ipswich may be regarded as synonymous with another local village such as Foxhall, but Kesgrave and Foxhall are not synonymous because they are different places.

Box H represents, for completeness, a spoken vocabulary for surnames, though there is probably little scope for synonyms for this field.

Box J represents a pronunciation vocabulary for surnames, to take account of homophones and homonyms. For example the surname Smith is generally pronounced with a short "i" as in the English word "pith", whilst the name Smythe is pronounced with a long "i" as in "lithe". Smyth, on the other hand, may be pronounced either way. Other instances of varying pronunciation may arise, for example due to variations in regional accents. Again, "primary" and "may be" links are shown, for reasons to be explained later.

Boxes K and L represent pronunciation vocabularies for forenames and geographical names respectively.

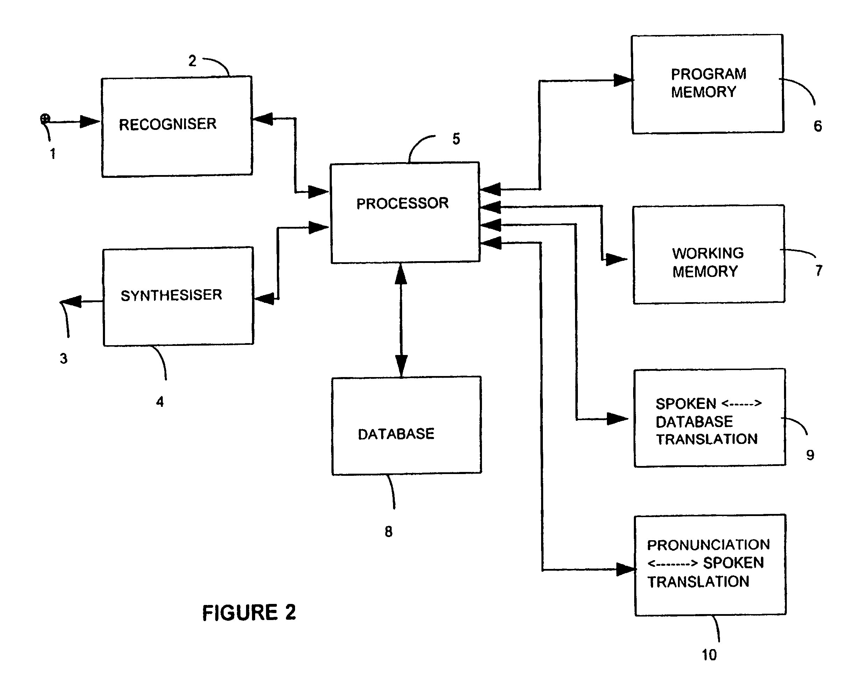

Figure 2 is a block diagram of an apparatus for conducting a dialogue. An audio signal input 1 is connected to a speech recogniser 2, whilst an audio signal output 3 is connected to a speech synthesiser 4. A control unit in the form of a stored-program controlled processor 5 controls the operation of the recogniser and synthesiser and also has access to a program memory 6, a working memory (RAM) 7, a database 8, a spoken vocabulary translation table 9 and a pronunciation table 10. The audio inputs and outputs are connected for two-way communication - perhaps via a telephone line - with a user.

The database 8 is assumed to contain telephone directory entries, as discussed above, in text form. The spoken vocabulary translation table 9 is a store containing word pairs consisting of a directory representation and a spoken vocabulary representation, e.g., for the Ipswich example,

| | |
|---|---|
| Database | Spoken |
| representation | representation |
| IPSWICH | IPSWICH |
| IPSWICH | KESGRAVE |
| IPSWICH | FOXHALL |
| KESGRAVE | KESGRAVE |
| KESGRAVE | IPSWICH |
| FOXHALL | FOXHALL |
| FOXHALL | IPSWICH |

(If desired any word used as a database representation which has a 1:1 correspondence with, and is the same as, a spoken vocabulary word may be omitted from the table, since no translation is required). The translation table 9 has a separate area for each type of field and may be accessed by the processor 5 to determine the database representation(s) corresponding to a given vocabulary word and *vice versa.* If desired (or if the database representations are not in text form) all items may be translated.

The pronunciation table 10 is a store containing a look-up table (and, if desired, a set of rules to reduce the number of entries in the look-up table) so that the processor 5 may access it (for synthesis purposes or for identifying homophones) to obtain, for a given spoken vocabulary word, a phonetic representation of one or more ways of pronouncing it, and, conversely (for recognition purposes), to obtain, for a given phonetic representation, one or more spoken vocabulary words which correspond to that pronunciation. A separate area for each type of field may be desirable.

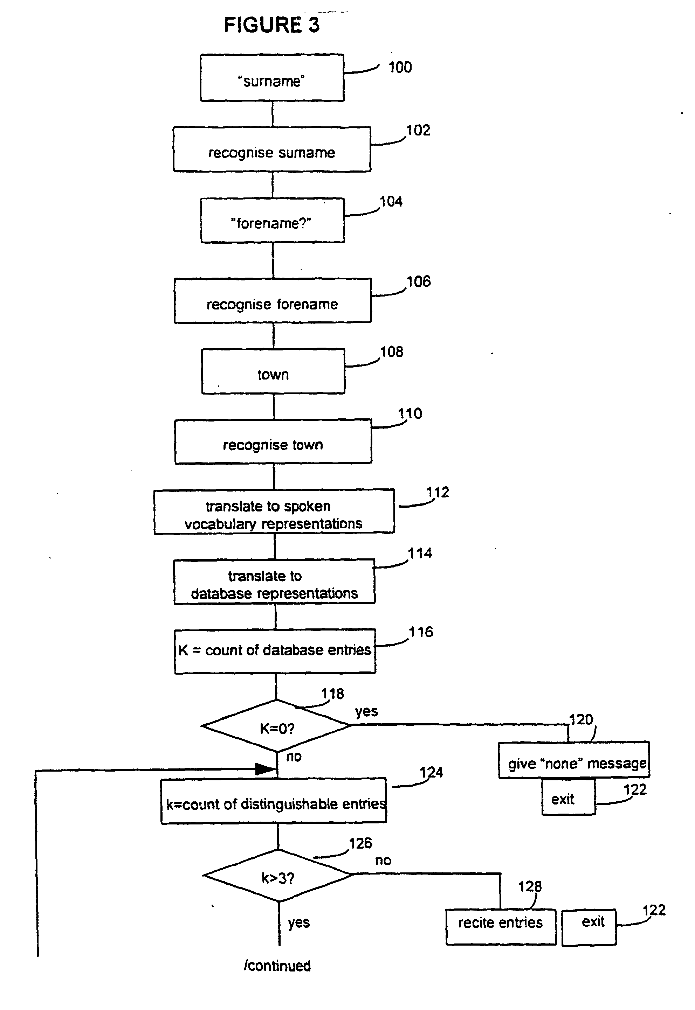

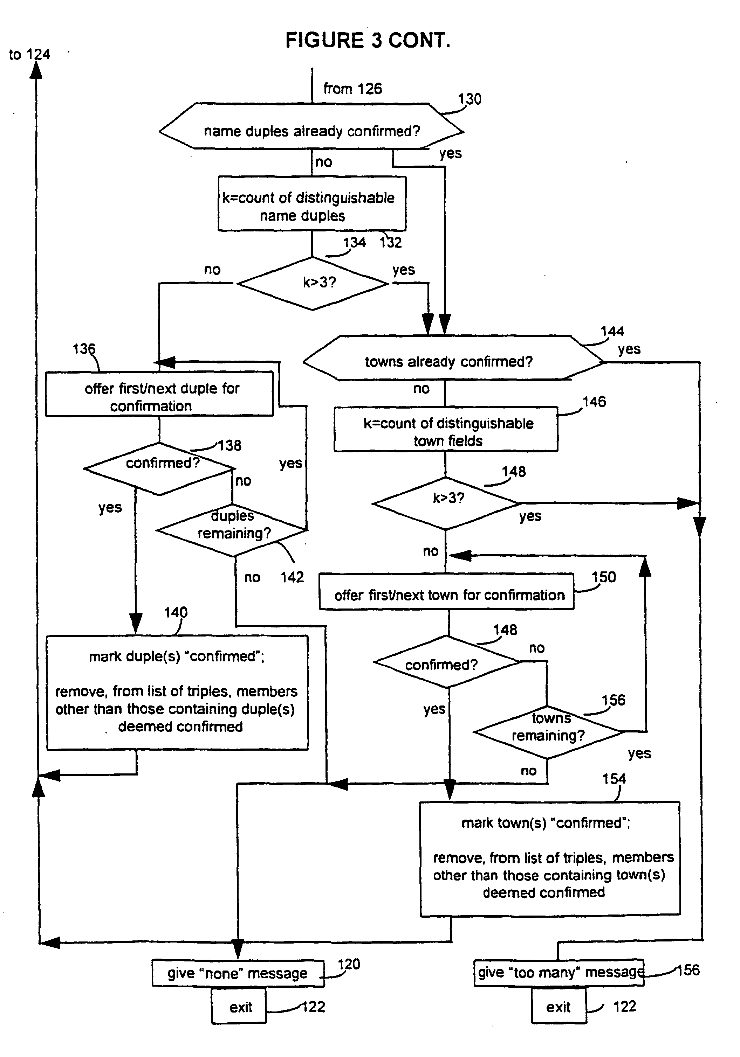

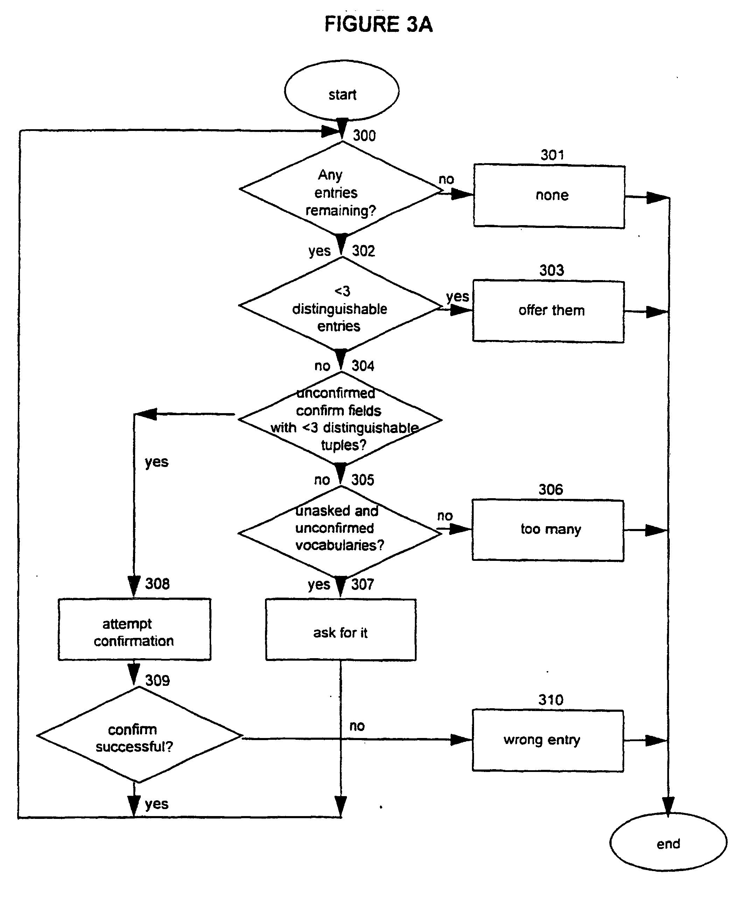

The operation of the apparatus is illustrated in the flow-chart of Figure 3 - which is implemented as a program stored in the memory 6. The first steps involve the generation, using the synthesiser, of questions to the user, and recognition of the user's responses. Thus in steps 100, 104, 108 the processor 5 sends to the synthesiser 4 commands instructing it to play announcements requesting the user to speak, respectively the surname, forename and town of the person whose telephone number he seeks. In steps 102, 106 and 110 the processor sends to the recogniser 2 commands instructing it to recognise the user's responses by reference to phonetic vocabularies corresponding to those fields. The recogniser may access the translation table 9,10 to determine the vocabularies to be used for each recognition step, or may internally store or generate its own vocabularies; in the latter case the vocabularies used must correspond to those determined by the table 9,10 (and, if appropriate, the database) so that it can output only words included in the phonetic vocabulary. The recogniser is arranged so that it will produce as output, for each recognition step, as many phonetic representations as meet a predetermined criterion of similarity to the word actually spoken by the user. (The recogniser could of course perform a translation to spoken vocabulary representations, and many recognisers are capable of doing so). It is possible that the recogniser may indicate that the word actually spoken by the user is too dissimilar to any of the phonetic representations in Table 10 and indicate this to the processor 5. Preferably the recogniser also produces a "score" or confidence measure for each representation indicating the relative probability or likelihood of correspondence to the word actually spoken. The preliminary steps 100 - 110 will not be discussed further as they are described elsewhere; for example reference may be made to our co-pending international patent application no. PCT/GB/02524.

In the following text, steps will be described which involve the matching of a number of scored tuples against database entries. From these matching entries a scored set of unique (or distinguishable) tuples are derived which correspond to a different set of (possibly overlapping) fields to the tuples used for the match.

Following step 110 the processor 5 has available to it, for each of the three fields, one or more phonetic representations deemed to have been recognised. What is required now is a translation to spoken vocabulary representations - i.e. the translation illustrated to the left of Figure 1. Thus in step 112 the processor accesses the table 10 to determine, for each word, one or more corresponding spoken vocabulary representations, so that it now has three sets of spoken vocabulary representations, one for each field.

The score for each spoken vocabulary representation is the score for the phonetic representation from which it was translated. If two phonetic representations translate to the same vocabulary representation, the more confident of the two scores may be taken. This is a specific example of the generalised matching process described above where the matching set of singles are pronunciations and the derived set of singles are spoken vocabulary items.

In step 114, the processor 5 now performs a translation to database representations - i.e. the translation illustrated in the centre of Figure 1 - using the table 9 to determine, for each spoken representation, one or more corresponding database representations, so that it now has three sets of database representations. Scores may be propagated as for the earlier translation. The database representations represent a number of triples (the actual number being the product of the number of representations in each of the three sets). The score for a triple is typically the product of the scores of the individual representations of which it is composed. At step 116, the processor generates a list of these triples and passes it to the database which returns a count K of the number of database entries corresponding to these triples. If (step 118) this number is zero, then the processor in step 120 sends a command to the synthesiser to play an announcement to the effect that no entry has been found, and terminates the program (step 122). Alternatively other action may be taken such as transferring the user to a manual operator.

If there are entries, then in step 124 the full entry tuples which matched at step 116 are retrieved in turn from the database to determine whether there are three or fewer distinguishable entries. The tuples are retrieved in order of likelihood, most likely first. It is possible that more than one tuple may share the same score. In this case an arbitrary ranking may be selected between them or a priori knowledge may be used to determine the ranking. As the tuples are retrieved, an assessment is made as to whether they represent three or fewer distinguishable entries. The meaning of "distinguishable" and the method of its determination will be explained presently. Once a count of four is reached the test is terminated. If (step 126) the number of distinguishable entries is three or fewer, then in step 128 the processor retrieves these entries from the database and forwards them to the synthesiser 4 which reads them to the user in confidence order, highest first, using the tables 9, 10 for translation from database representation to primary phonetic representation.

If there are more than three distinguishable entries then the process enters an iterative confirmation phase in which an attempt is made to identify lists of extracted tuples which contain three or fewer distinguishable tuples, and to offer the tuples in turn to the user for confirmation. In this example the tuples are the duple corresponding to the name (i.e. forename + surname), and the single corresponding to the town. Note that, although the case in this example, it is not in principle necessary that the constituent words of these tuples correspond to fields for which the user has already been asked.

In step 130 a check is made as to whether the name duples have already been offered for confirmation; on the first pass the answer will always be "no", and at step 132 a list of extracted name duples is prepared from the list of triples. The name duples from the list are examined in similar fashion to that of the triples in step 124 to determine whether there are three or fewer distinguishable duples. (If desired the number of non-identical database representation duples in the list may be counted, and if this exceeds a predetermined limit, e.g. 30 the detailed examination process may be skipped (to step 144)). If there are three or fewer distinguishable duples, (step 134) then each of the scored duples are translated into a single primary phonetic representation and fed to the synthesiser in confidence order in step 136 so that the synthesiser speaks the question (e.g.) "is the name John Smith? please answer yes or no" one at a time with the recogniser forwarding the reply to the processor (138) for testing for "yes" or "no". If the user replies "yes", then, in step 140:
(a) the surname and forename fields are marked "confirmed" so that further offering of them for confirmation is bypassed by the test at step 130;
(b) all members of the list of triples, other than those which are related to the confirmed duple (see below), are deleted.

The process may then recommence from step 124.

If a user replies "no" then the corresponding members in the list of triples are deleted. Which ones are deleted depends upon the defined relationship between the phonetic representations and the database representations, as chosen by the system designer. For instance, if the user is asked "Is the name John Smith?" and the user replies "no", all members of the list of triples including John and Smith/Smyth/Smythe may be deleted or only those members including John and Smith/Smyth may be deleted, it having been decided by the system designer that Smythe is always pronounced differently to Smith or Smyth.

Equally, if the user is asked "Is the name Dave Smith?" and the user replies "no", the members including Dave Smith may be deleted and the user asked "Is the name David Smith?"

If (step 142) the user has answered no to all the offered tuples, this is considered a failure and the process it terminated via steps 120 and 122.

If in the test at step 134 the number of distinguishable name duples is too large for confirmation, or at step 130 on a second or subsequent pass the name confirmation has already occurred, and assuming (step 144) the town name has not yet been offered for confirmation, then a town name confirmation process is commenced, comprising steps 146 to 154 which are in all respects analogous to the steps 132 to 142 already described.

If these processes fail to reduce the number of distinguishable entries at the test 126 then the process eventually terminates with an announcement 156 that too many entries have been found for a response to be given. Alternatively, a further procedure may follow in which one or more further questions are asked (as in step 100) to obtain information on further fields.

This process shown in Figure 3 from step 116 onwards has, for clarity, been described in terms of confirmation of a duple and a single. A more generalised algorithm might proceed as follows.
Start: If there are no database entries still active:
Give "none" message.
Finish algorithm.
Jump: If there are three or less distinguishable database entries:
Offer them.
Finish algorithm.
   If there are more than three distinguishable database entries, then:
   Do the following for successive prioritised fields or combinations of fields that have not already been confirmed until no such fields remain:
      If for this there is a tuple list with 3 or less distinguishable tuples then:
         Attempt to confirm this list.
         If positive confirmation, confirm it and go to JUMP.
         If negative confirmation give "wrong entry" message: go back to "do the following":
In a prioritised list, get the next vocabulary which may be asked.
If there is an un-asked and un-confirmed vocab remaining:
Ask for it.
Goto start of algorithm.
If not:
Give "too many" message.
Finish algorithm

An alternative process for the whole of the enquiry process is shown in Figure 3a. This process proceeds as follows:
Start
If there are no database entries still active (300):
   give "none" message (301)
   finish algorithm
If there are three or less distinguishable database entries (302):
   offer them (303)
   finish algorithm
If there are more than three distinguishable database entries (302), consider each of a prioritised list of fields or combinations of fields that have not yet been confirmed (304):
   If there is a tuple list with three or less distinguishable tuples
      Attempt to confirm this list (308)
         If positive confirmation (309): go to start
         If negative:
            give wrong entry message (310)
            finish algorithm
   If not:
      Consider next field or combination of fields.
   If no tuple lists with three or less distinguishable tuples:
      In a prioritised list, if there is a remaining vocabulary which remains un-asked and un-confirmed (305):
         ask for it (307)
         go to "start"
      if not:
         give ''too many" message (306)
         finish algorithm

In the above procedures, it is required to examine a list of tuples in database representation to determine how many distinguishable tuples there are. The tuple in question may be an entire database entry (as in step 124 above), it may be an extracted tuple containing representations from two (or more) fields (as in step 132) or it may be an extracted single (as in step 146).

Two representations are considered indistinguishable if:
(a) they are identical; or
(b) they translate to identical spoken vocabulary words (e.g. they are synonyms or are geographically confused); or
(c) they translate to spoken vocabulary words which are homophones (i.e. those words translate to identical phonetic representations).

Two tuples are considered indistinguishable if every field of one tuple is indistinguishable (as defined above) from the corresponding field of the other tuple.

Equally two representations are considered distinguishable if:
(a) they are not identical; and
(b) they do not translate to identical spoken vocabulary words (e.g. they are not synonyms or geographically confused); and
(c) they do not translate to spoken vocabulary words which are homophones (i.e. the words do not translate to identical phonetic representations).

Suppose that we have a list of tuples in database representation where the first tuple in the list is D(1) and the tuple currently occupying the n'th position in the list is D(n) where n=1,...,N, there being N tuples in the list. Each tuple consists of M fields, designated d, so that the m'th field of tuple D(n) is d(n,m) - i.e. D(n) = {d(n,m)}, m= 1,...,M. Preferably the list is ordered by score; i.e. the tuple having the highest confidence is D(1), the next D(2) and so on.

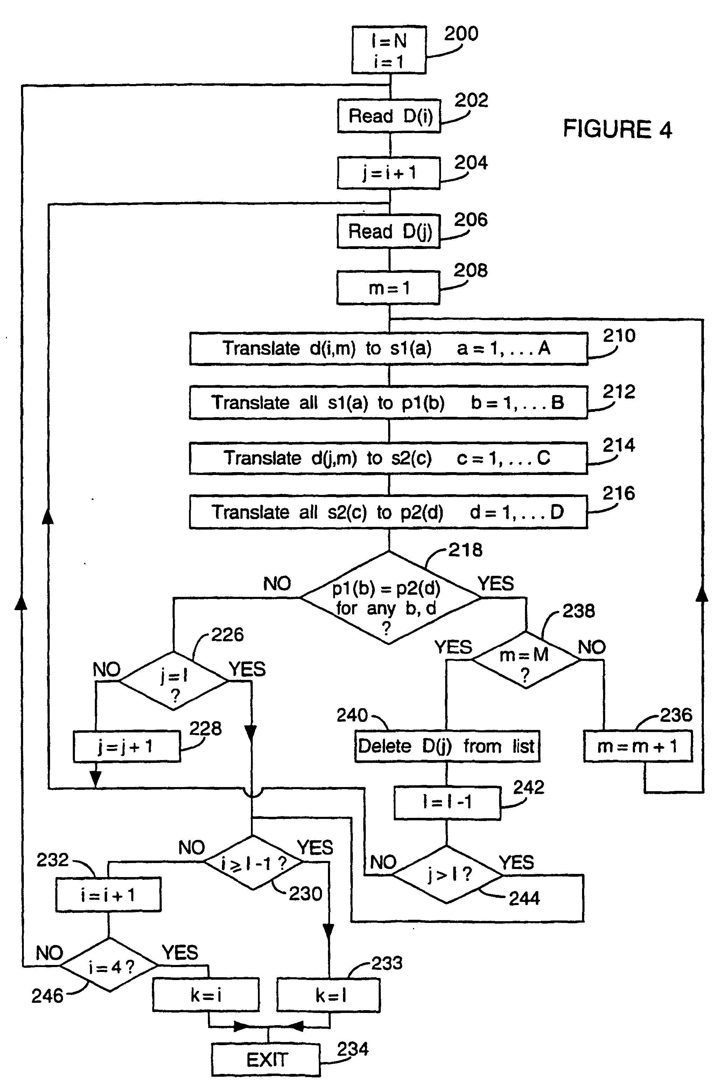

The process to be described is illustrated in the flowchart of Figure 4 and involves taking the first tuple from the list, and comparing it with the tuple below it in the list to ascertain whether the two are distinguishable. If they are not, the tuple occupying the lower position is deleted from the list. This is repeated until all tuples have been examined. The same steps are then performed for the tuple now occupying the second position in the list, and so on; eventually every tuple remaining in the list is distinguishable from every other. If desired, the process may be terminated as soon as it is certain that the number of distinguishable tuples exceed that which can be handled by subsequent steps (i.e., in this example, 3).

In Figure 4, i points to a tuple in the list and j points to a tuple lower down the list. I is the number of tuples in the list. In step 200, i is initialised to 1, and I is set to N, and in step 202 D(i) is read from the database. Step 204 sets j to point to the following tuple and in step 206 D(j) is read. A field pointer m is then initialised to 1 in step 208 and this is followed by a loop in which each field of the two tuples is taken in turn. Field m of tuple D(i) is (step 210) translated, with the aid of the table 9, into one or more spoken vocabulary words s1(a) where a = 1,...A and A is, effectively, the number of synonyms found. The spoken vocabulary word(s) a1 (a) is/are then translated (212) with the aid of the table 10 into a total of B phonetic representations p1(b) (b = 1,...B). B is the number of such representations, i.e. A multiplied by the number of homophones. Analogous steps 214, 216 perform a two-stage translation of the corresponding field of D(j) to produce one or more phonetic representations p2(d) (d = 1, ...D).

In step 218, each of the phonetic representations p1(b) is compared with each of the representations p2(d) (i.e. BD comparisons in total). If equality is not found in any of these comparisons, then the two tuples are considered distinguishable. If (step 226) j has not reached the last tuple in the list, it is incremented (228) prior to reading a further tuple in a repeat of step 206; otherwise the tuple pointer i is tested at step 230 as to whether it has reached the penultimate member of the list and either (if it has not) is incremented (232) prior to a return to step 202, or (if it has) the process ends. At this point, the list now contains only mutually distinguishable tuples - I in number - and thus the result k is set to I in step 233 prior to exit from this part of the process at step 234.

If on the other hand the comparison at 218 indicates identity between one of the phonetic representations generated for one field of one tuple and one of the phonetic representations generated for the same field of the other tuple then it is necessary to increment m (step 236) and repeat steps 210 to 218 for a further field. If all fields of the two tuples have been compared and all are indistinguishable then this is recognised at step 238 and the tuples are deemed to be indistinguishable. In this case, the lower tuple D(j) is removed from the list and I is decremented so that it continues to represent the number of tuples remaining in the list (steps 240, 242). j is then tested at step 244 to determine whether it points beyond the end of the (now shortened) list and if not a further tuple is examined, continuing from step 206. Otherwise the process proceeds to step 230, already described.

Each time step 232 increments i to point to a tuple, it is known that there are at least i tuples which will not be removed from the list by step 240. Thus at this point i can be tested (step 246) to see if it has reached 3, and if so the process may be interrupted, k set to 4, and thence to the exit 234.

In order to clarify the relationship between the algorithm of Figure 4 and the steps of Figure 3 or 3a, it should be mentioned that:
(a) the algorithm represents the execution of step 124, with the list at the conclusion of Figure 4 being used to access (from the database) the entries to be offered in step 128;
(b) the algorithm represents the execution of step 132, with the list at the conclusion of Figure 4 representing the list of name duples (in database representation) to be offered to the user in step 136;
(c) the algorithm represents the execution of step 146, with list at the conclusion of Figure 4 representing the list of towns to be offered to the user in step 150;
(d) the algorithm represents the execution of step 302.

It remains to explain the removal which occurs in steps 140 and 154 in Figure 3. Taking step 140 as an example, the principle followed is that: where the user has confirmed a tuple (in this case a duple) which is one of a pair (or group) of tuples deemed indistinguishable, then this is considered to constitute confirmation also of the other tuple(s) of the pair or group. For example, if the list of name duples contains:
Dave Smith
David Smyth
and these are considered by step 132 to be indistinguishable, only one entry (for example the first "Dave Smith") is offered to the user for confirmation in step 136. Which tuple is presented is determined according to a choice made by the system designer. However, if the user says "yes", then in step 140, all tuples containing "Dave Smith" and all tuples containing "David Smyth" are retained.

Whilst this could be done using the results of the translations performed in step 132, we prefer to proceed as follows. Each field p of the confirmed duple in phonetic representation (i.e. the one generated in step 136) is translated using the tables 9, 10 into one or more database representation. All duples represented by combinations of these representations are to be confirmed - i.e. any of the list of triples which contains one of these duples is retained, and the other triples are deleted.

It is perhaps worth clarifying the relationship between the Entity Relationship Diagram of Figure 1 and the processes set out in Figures 3 and 4. In these processes, translations occur from database representation to spoken vocabulary representation to phonetic representation (i.e. right to left in Figure 1) and in the opposite direction, viz. from phonetic representation to spoken vocabulary representation to database representation (i.e. left to right in Figure 1). The existence of alternative paths in the diagram (e.g. may be spoken/is primarily spoken) implies a choice of translation routes. For synthesis, the "primarily spoken" routes would normally be used; for other purposes, variations are possible according to one's desire to include or exclude synonyms or homophones in the translation. Different routes are tabulated below, with an example set of routes for forenames. Other mappings may be used.

| **Direction** | **Used in steps** | **Description** | **Typical Route for forenames** |
|---|---|---|---|
| input to database | 112, 114 | Mappings used to convert a recognition result into all possible database representations | MayBePronounced..../ MayBeSpoken..... (i.e. include synonyms and homophones) |
| database to output | 124, 132, 146 | mappings used to decide on distinguishable database representations | IsPrimarilySpoken...../ MayBePronounced..... (i.e. results in synonyms but not homophones being included in the resulting list of distinguishable tuples) |
| | 302, 304 | | |
| database to output | 124, 132, 146 | mappings used to decide on distinguishable database representations | IsPrimarifySpoken/ IsPrimarilyPronounced (i.e. excludes homophones from output but includes synonyms and homonyms) |
| | 302, 304 | | |
| database to output | 136, 150 | mappings used for output of result e.g. synthesis | IsPrimarilySpoken/ IsPrimarilyPronounced (i.e.provides a primary output form for each database representation) |
| | 128, 303, 308 | | |
| output to database | 140,154 | mappings used to confirm an output pronunciation back into database representation | MayBePronounced/ MayBeSpoken (i.e. include both synonyms and homophones) |
| | 308 | | |
| output to database | 140, 154, 308 | mappings used to exclude items rejected by user | Maybe Pronounced/ Is Primarily Spoken (i.e.excludes homophones but includes synonyms for subsequent database searches) |

Thus when an input is received and machine representations representing the input signal are generated, the machine representations for the single input are converted to all possible data representations. To achieve this, the input is mapped to the spoken recognition vocabulary by the "May be pronounced" route. Thus all possible spoken representations of the input are identified. These spoken vocabulary representations are then mapped onto all possible database representations which the spoken representations may represent (e.g. "May be spoken"). For example, say the forename "Dave'' is input and the phonetic representations D AI V and M AI V are generated by the speech recogniser 2. These phonetic representations are then converted to spoken vocabulary representations, for instance, "Dave" and "Mave". Each of these spoken vocabulary representations is then converted, by means of the store 9, into all possible database representations ("May be spoken") e.g. Dave, David, Mave, Mavis. The processor 5 then searches the database 8 for all entries including any of these entries in their forename field.

For all entries found the processor 5 then examines each representation contained in the selected field to identify distinguishable ones of those combinations. The distinguishable entries may then be presented to the user for confirmation. To achieve this, the processor 5, with reference to the spoken vocabulary store 10 and according to the defined relationships, translates the identified database representations into spoken vocabulary via the "may be spoken" route. Thus all entries of Dave are translated to "Dave" and "David", all entries for David are translated to "Dave" or "David", all entries for Mave are translated to "Mave" or "Mavis" and all entries of Mavis are translated to "Mave" or "Mavis". The processor 5 then translates the spoken vocabulary representations into phonetic representations ("may be pronounced") with reference to store 10. Thus the phonetic representations which represent how "Dave", "David", "Mave" and "Mavis" are pronounced are determined as D AI V, D AI V I D, D AA V I D, M AI V and M AI VI S. These phonetic representations are then examined to identify distinguishable ones. For example, Dave and David are indistinguishable because they share at least one common pronunciation. However, Mave and Dave are distinguishable because they do not share any common phonetic representation. If two database representations are found to be indistinguishable, one of the representations is maintained and the other is discarded e.g. David may be selected over Dave and Mavis over Mave. This choice is determined by the system designer and stored in memory 6. The phonetic representation of the most probable of "David" and "Mavis" is presented by the processor 5 to the synthesiser 4 to a user using the "Is primarily spoken"/"is primarily pronounced" relationship.

Note that in practice the stores 9, 10 may contain separate "tables" for each mapping.

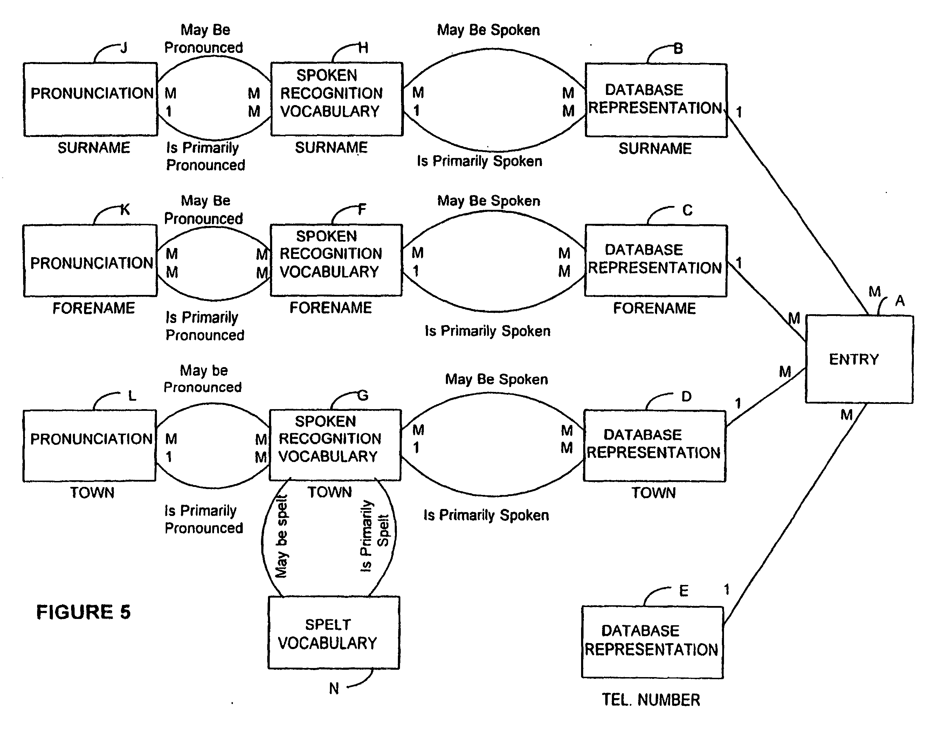

Figure 1 shows a situation in which the vocabulary of the announcement means e.g. the speech synthesiser is the same as the vocabulary of the input means e.g. the speech recogniser. However this is not always so. For instance, it should be noted that spellings may also be used as an alternative input and/or confirmation medium to spoken forms. The techniques required for spelling are directly analogous to spoken forms. Figure 5 corresponds to Figure 1 with the inclusion of spelling (illustrated by box M) for town names (spelling may also be provided for surnames and forenames although, for simplicity, these mappings have not been shown in Figure 5). Translations of "may be spelt" and "is primarily spelt" must be provided in addition to the spoken recognition.

If spellings are to be used during recognition and/or confirmation then for all the routes mentioned above with reference to Figure 1, "Spelt" is substituted for 'Pronounced' and the algorithms all still apply.

It should also be mentioned that spoken or spelt input or output is not essential - since the considerations concerning the offering and confirming still arise. For example, keypad input could be used, which has ambiguity problems owing to the allocation of more than one letter to each button of a telephone keypad. In this case a further vocabulary - of keypad input codes - is required, with "May be keyed ...." translations analogous to the pronunciation and spelling translations described above.

The machine representations of the input vocabulary and the database may be generated according to the same technique, for instance the database entries may be stored in text form and the input also be in text form, with the machine representations of the database and the output being generated according to a different technique e.g. a spoken output.

Confusion may arise if a user is presented with an announcement which includes a synonym of the actual word said by the user. For instance, say a user asks for "Dave Smith" and the system geneates an output as follows: "Did you say David Smith?" In order to avoid this confusion, a check may be carried out to ensure that the word corresponding to the identified distinguishable database entry corresponds also to the word recognised by the input means.

## Claims

1. A database access apparatus comprising:
(a) a database (8) containing entries each comprising a plurality of fields which contain machine representations of items of information pertaining to the entry, the said representations forming a first vocabulary;
(b) announcement means (4) responsive to machine representations falling within a second vocabulary of such representations to generate audio signals representing spoken announcements;
(c) input means (2) operable to receive signals and to produce machine representations thereof falling within a third vocabulary of such representations; **characterised by** further comprising:
(d) translation means (9,10) defining a relationship between the first vocabulary and the second vocabulary and between the first vocabulary and the third vocabulary; and
(e) control means (5) operable
(i) to generate, in accordance with the defined relationship, for each representation produced by the input means, one or more representations according to the first vocabulary;
(ii) to identify database entries containing the generated representations;
(iii) to examine each representation or combination of representations which is contained in a selected field or combination of fields of the identified entries to identify distinguishable one(s) of those representations or combinations, a distinguishable representation or combination being one which, when translated in accordance with the defined relationship into representations of the second vocabulary, differs from every other such distinguishable representation or combination when similarly translated; and
(iv) to control the announcement means to generate an announcement including at least one word or combination of words which correspond(s) to one of the distinguishable representations or combinations.

2. Apparatus according to claim 1 wherein the control means is operable to control the announcement means to generate successive announcements, each of which includes at least one word or combination of words which correspond(s) to one of the distinguishable representations or combinations, the control means being operable to control the announcement means to output the announcements in sequential confidence order, the first announcement including at least one word or combination or words which correspond(s) to the most likely distinguishable representation or combinations.

3. An apparatus according to claim 1 or 2 in which the control means is operable, in step (iv), for the or each distinguishable representation or combination, to generate, using the translation means, from the distinguishable representation or combination, one representation or combination in the second vocabulary and to transmit this to the announcement means.

4. An apparatus according to claim 1 or 2 in which the control means is operable, in step (iv), for the or each distinguishable representation or combination, to transmit to the announcement means one representation or combination in the second vocabulary which corresponds, in accordance with a relationship defined by the translation means, to the distinguishable representation or combination and which has already been generated in step (iii).

5. An apparatus according to any of claims 1 to 4 in which the control means is operable in step (iv) to generate an announcement requesting confirmation of the included word or combination and is further arranged, in operation:
(v) upon receipt of a confirmatory response, to generate from a representation or combination in the second vocabulary, which corresponds to the included word(s), one or more representations or combinations according to the first vocabulary and to identify the database entries or entry which contains such a representation or combination in the selected field(s).

6. An apparatus according to any one of the preceding claims in which the input means is a speech recogniser operable to receive audio signals.

7. An apparatus according to claim 6 in which the second and third vocabularies are identical.

8. An apparatus according to any preceding claims wherein the first and third vocabularies are identical.

9. An apparatus according to any preceding claim in which at least one of the selected field(s) is a field in which, in step (ii), a generated representation was found, and in which a word included at step (iv) is a word which corresponds to a representation generated by the input means.

10. Apparatus according to any preceding claims further comprising an intermediate vocabulary and the translation means defines the relationships between the first and the intermediate vocabulary; the second and the intermediate vocabulary; and the third and the intermediate vocabulary.

11. A method of accessing a database system, said database system comprising a database containing entries each comprising a plurality of fields which contain machine representations of items of information pertaining to the entry, the said representations forming a first vocabulary; announcement means responsive to machine representations falling within a second vocabulary of such representations to generate audio signals representing spoken announcements; and input means operable to receive signals and to produce machine representations falling within a third vocabulary of such representations;
the method of accessing the database system being **characterised by** comprising:
(i) generating, in accordance with a defined relationship between the first vocabulary and the third vocabulary, for each representation produced by the input means, one or more representations according to the first vocabulary;
(ii) identifying database entries containing the generated representations;
(iii) examining each representation or combination of representations which is contained in a selected field or combination of fields of the identified entries to identify distinguishable one(s) of those representations or combinations, a distinguishable representation or combination being one which, when translated in accordance with the defined relationship into representations of the second vocabulary, differs from every other such distinguishable representation or combination when similarly translated; and
(iv) controlling the announcement means to generate an announcement including at least one word or combination of words which correspond(s) to one of the distinguishable representations or combinations.

12. A method according to claim 11 further comprising, in step (iv), controlling the output means to output one or more announcement(s) in sequential confidence order, the first announcement including at least one word or combination of words which corresponds to the most likely distinguishable representation.

13. A method according to Claim 11 or 12 further comprising:
(a) generating at least one announcement requiring a response;
(b) recognising the response(s);
(c) identifying database entries containing fields matching the recognised responses;
(d) in the event that the number of such entries exceeds a predetermined limit, generating an output containing at least one word corresponding to a selected field of an identified entry for a positive or negative response;
(e) upon receipt of a positive response, identifying database entries which contain fields matching the recognised responses and whose selected fields match the said word; and
(f) repeating steps (d) and (e) at least once.

14. A method according to claim 11 or 12 comprising:
(a) generating at least one announcement requiring a response;
(b) recognising the response(s);
(c) identifying database entries containing fields matching the recognised response(s);
(d) in the event that the number of such entries is below or equal to a predetermined limit, generating an output presenting one or more of the entries each containing one or more of the field(s) of the matching entries, and exit;
(e) in the event that the number of such entries exceeds a predetermined limit, for a particular field or selection of fields, examining a distinguishable representation or selection of representations, which is contained in the particular field or combination of fields of the identical entries;
(f) in the event that the number of such distinguishable representations or combinations of representations is above a predetermined limit, repeat step (e), selecting another field or selection of fields, according to a pre-determined order, that has not already been considered until no such fields remain to be considered; and
(g) generating at least one output requiring a response that has not already been requested or confirmed;
(h) recognising the response(s);
(i) repeat step (c) at least once;
(j) in the event that the number of such distinguishable representations or combinations of representations is below or equal to a predetermined limit, generating an announcement containing at least one word corresponding to the selected field(s) of an identified entry for a positive or negative response;
(k) upon receipt of a positive response, identifying database entries which contain fields matching the recognised responses and whose selected fields match the said words or combination of words; and
(I) repeating steps (d) and (e) at least once;
(m) upon receipt of a negative response for all such word or words, exiting the database accessing method.

## Patentansprüche

1. Datenbankzugriffsvorrichtung mit
(a) einer Datenbank (8), die Einträge enthält, wobei jeder Eintrag eine Vielzahl von Feldern aufweist, die maschinelle Darstellungen von den Eintrag betreffenden Informationselementen enthalten, wobei die Darstellungen ein erstes Vokabular bilden;
(b) Ansagemitteln (4), die abhängig von maschinellen Darstellungen, welche in ein zweites Vokabular derartiger Darstellungen fallen, gesprochene Ansagen darstellende Audiosignale erzeugen;
(c) Eingabemitteln (2), die ausgebildet sind, Signale zu empfangen und daraus maschinelle Darstellungen zu erzeugen, die in ein drittes Vokabular derartiger Darstellungen fallen;
**dadurch gekennzeichnet, dass** die Datenbankzugriffsvorrichtung ferner aufweist:
(d) Übersetzungsmittel (9, 10), die eine Beziehung zwischen dem ersten Vokabular und dem zweiten Vokabular und zwischen dem ersten Vokabular und dem dritten Vokabular definieren; und
(e) Steuerungsmittel (5), die ausgebildet sind,
(i) für jede von den Eingabemitteln erzeugten Darstellungen in Übereinstimmung mit der definierten Beziehung eine oder mehrere Darstellung(en) gemäß dem ersten Vokabular zu erzeugen;
(ii) Datenbankeinträge, welche die erzeugten Darstellungen enthalten, zu identifizieren;
(iii) jede Darstellung oder Kombination von Darstellungen, die in einem ausgewählten Feld oder in einer Kombination von Feldern der identifizierten Einträge enthalten ist, zu untersuchen, um aus diesen unterscheidbare Darstellungen oder Kombinationen zu identifizieren, wobei eine unterscheidbare Darstellung oder Kombination derart ist, dass sie sich, wenn sie gemäß der definierten Beziehung in Darstellungen des zweiten Vokabulars übersetzt wird, von jeder anderen derartigen unterscheidbaren Darstellung oder Kombination unterscheidet, wenn sie ähnlich übersetzt wird; und
(iv) die Ansagemittel zu steuern, um eine Ansage mit zumindest einem Wort oder einer Kombination von Wörtern zu erzeugen, das/die einem der unterscheidbaren Darstellungen oder Kombinationen entspricht.

2. Vorrichtung gemäß Anspruch 1, wobei das Steuerungsmittel ausgebildet ist, die Ansagemittel zu steuern, um aufeinander folgende Ansagen zu erzeugen, von denen jede Ansage zumindest ein Wort oder eine Kombination von Wörtern umfasst, das/die einem der unterscheidbaren Darstellungen oder Kombinationen entspricht, wobei das Steuerungsmittel ausgebildet ist, die Ansagemittel zu steuern, die Ansagen in einer aufeinander folgenden Reihenfolge der Wahrscheinlichkeit auszugeben, wobei die erste Ansage zumindest ein Wort oder eine Kombination von Wörtern umfasst, das/die der am wahrscheinlichsten unterscheidbaren Darstellung oder Kombination entspricht.

3. Vorrichtung gemäß Anspruch 1 oder 2, wobei das Steuerungsmittel ausgebildet ist, in Schritt (iv) für die oder jede unter-scheidbare Darstellung oder Kombination unter Verwendung des Übersetzungsmittels aus der unterscheidbaren Darstellung oder Kombination eine Darstellung oder Kombination in dem zweiten Vokabular zu erzeugen und diese an das Ansagemittel zu übertragen.

4. Vorrichtung gemäß Anspruch 1 oder 2, wobei das Steuerungsmittel ausgebildet ist, in Schritt (iv) für die oder jede unterscheidbare Darstellung oder Kombination eine Darstellung oder Kombination in dem zweiten Vokabular an das Ansagemittel zu übertragen, die gemäß einer von dem Übersetzungsmittel definierten Beziehung der unterscheidbaren Darstellung oder Kombination entspricht und die bereits in Schritt (iii) erzeugt wurde.

5. Vorrichtung gemäß einem der Ansprüche 1 bis 4, wobei das Steuerungsmittel ausgebildet ist, in Schritt (iv) eine Ansage zu erzeugen, die eine Bestätigung des enthaltenen Wortes oder der Kombination anfordert, und ferner ausgebildet ist, in Betrieb (v) bei Erhalt einer Bestätigungsantwort aus einer Darstellung oder Kombination in dem zweiten Vokabular, die dem enthaltenen Wort/den enthaltenen Wörtern entspricht, eine oder mehrere Darstellungen oder Kombinationen gemäß einem ersten Vokabular zu erzeugen und die Datenbankeinträge oder den Datenbankeintrag zu identifizieren, die eine derartige Darstellung oder Kombination in den gewählten Feldern enthalten bzw. der eine derartige Darstellung oder Kombination in dem gewählten Feld enthält.

6. Vorrichtung gemäß einem der vorhergehenden Ansprüche, wobei das Eingabemittel ein zum Empfang von Audiosignalen ausgebildetes Spracherkennungsgerät ist.

7. Vorrichtung gemäß Anspruch 6, wobei das zweite und das dritte Vokabular identisch sind.

8. Vorrichtung gemäß einem der vorhergehenden Ansprüche, wobei das erste und das dritte Vokabular identisch sind.

9. Vorrichtung gemäß einem der vorhergehenden Ansprüche, wobei zumindest eines der gewählten Felder ein Feld ist, in dem in Schritt (ii) eine erzeugte Darstellung gefunden wurde, und in dem ein in Schritt (iv) enthaltenes Wort ein Wort ist, das einer von dem Eingabemittel erzeugten Darstellung entspricht.

10. Vorrichtung gemäß einem der vorhergehenden Ansprüche, die ferner ein Zwischen-Vokabular aufweist und wobei das Übersetzungsmittel die Beziehungen zwischen dem ersten und dem Zwischen-Vokabular, zwischen dem zweiten und dem Zwischen-Vokabular und zwischen dem dritten und dem Zwischen-Vokabular definiert.

11. Verfahren zum Zugriff auf ein Datenbanksystem, wobei das Datenbanksystem eine Datenbank aufweist, die Einträge enthält,
wobei jeder Eintrag eine Vielzahl von Feldern aufweist, die maschinelle Darstellungen von den Eintrag betreffenden Informationselementen enthalten, wobei die Darstellungen ein erstes Vokabular bilden; Ansagemittel aufweist, die abhängig von maschinellen Darstellungen, welche in ein zweites Vokabular derartiger Darstellungen fallen, gesprochene Ansagen darstellende Audiosignale erzeugen; und Eingabemittel aufweist, die ausgebildet sind, Signale zu empfangen und daraus maschinelle Darstellungen zu erzeugen, die in ein drittes Vokabular derartiger Darstellungen fallen;
wobei das Verfahren zum Zugriff auf das Datenbanksystem **gekennzeichnet ist durch**:
(i) Erzeugen, in Übereinstimmung mit einer definierten Beziehung zwischen dem ersten Vokabular und dem dritten Vokabular, für jede von den Eingabemitteln erzeugten Darstellungen von einer oder mehreren Darstellung(en) gemäß dem ersten Vokabular;
(ii) Identifizieren von Datenbankeinträgen, welche die erzeugten Darstellungen enthalten;
(iii) Untersuchen jeder Darstellung oder Kombination von Darstellungen, die in einem ausgewählten Feld oder in einer Kombination von Feldern der identifizierten Einträge enthalten ist, um aus diesen unterscheidbare Darstellungen oder Kombinationen zu identifizieren, wobei eine unterscheidbare Darstellung oder Kombination derart ist, dass sie sich, wenn sie gemäß der definierten Beziehung in Darstellungen des zweiten Vokabulars übersetzt wird, von jeder anderen derartigen unterscheidbaren Darstellung oder Kombination unterscheidet, wenn sie ähnlich übersetzt wird; und
(iv) Steuern der Ansagemittel, um eine Ansage mit zumindest einem Wort oder einer Kombination von Wörtern zu erzeugen, das/die einem der unterscheidbaren Darstellungen oder Kombinationen entspricht.

12. Verfahren gemäß Anspruch 11, das ferner in Schritt (iv) ein Steuern der Ausgabemittel aufweist, um eine oder mehrere Ansage(n) in einer aufeinander folgenden Reihenfolge der Wahrscheinlichkeit auszugeben, wobei die erste Ansage zumindest ein Wort oder eine Kombination von Wörtern umfasst, das/die der am wahrscheinlichsten unterscheidbaren Darstellung entspricht.

13. Verfahren gemäß Anspruch 11 oder 12, das ferner aufweist:
(a) Erzeugen von zumindest einer Ansage, die eine Antwort erfordert;
(b) Erkennen der Antwort(en);
(c) Identifizieren von Datenbankeinträgen, die mit den erkannten Antworten übereinstimmende Felder aufweisen;
(d) wenn die Anzahl derartiger Einträge eine vorbestimmte Grenze überschreitet, Erzeugen einer Ausgabe, die zumindest ein Wort aufweist, das einem gewählten Feld eines identifizierten Eintrags für eine positive oder negative Antwort entspricht;
(e) Identifizieren, bei Erhalt einer positiven Antwort, von Datenbankeinträgen, die mit den erkannten Antworten übereinstimmende Felder aufweisen und deren gewählte Felder mit dem Wort übereinstimmen; und
(f) Wiederholen der Schritte (d) und (e) zumindest einmal.

14. Verfahren gemäß Anspruch 11 oder 12, das aufweist:
(a) Erzeugen von zumindest einer Ansage, die eine Antwort erfordert;
(b) Erkennen der Antwort(en);
(c) Identifizieren von Datenbankeinträgen, die mit der erkannten Antwort/ den erkannten Antworten übereinstimmende Felder aufweisen;
(d) wenn die Anzahl derartiger Einträge unterhalb oder gleich einer vorbestimmten Grenze liegt, Erzeugen einer Ausgabe, die einen Eintrag oder mehrere Einträge darstellt, wobei jeder ein Feld oder mehrere Felder der übereinstimmenden Einträge aufweist, und Beenden;
(e) wenn die Anzahl derartiger Einträge eine vorbestimmte Grenze überschreitet, Untersuchen einer unterscheidbaren Darstellung oder Auswahl von Darstellungen für ein bestimmtes Feld oder eine Auswahl von Feldern, die in dem bestimmten Feld oder Kombination von Feldern der identischen Einträge enthalten ist;
(f) wenn die Anzahl derartiger unterscheidbarer Darstellungen oder Kombinationen von Darstellungen über einer vorbestimmten Grenze liegt, Wiederholen von Schritt (e), Wählen eines anderen Feldes oder einer Auswahl von Feldern, das/die noch nicht in Betracht gezogen wurde, gemäß einer vorbestimmten Reihenfolge, bis keine Felder mehr betrachtet werden müssen; und
(g) Erzeugen von zumindest einer Ausgabe, die eine Antwort erfordert, welche noch nicht angefordert oder bestätigt wurde;
(h) Erkennen der Antwort(en);
(i) Wiederholen von Schritt (c) zumindest einmal;
(j) wenn die Anzahl derartiger unterscheidbarer Darstellungen oder Kombinationen von Darstellungen unterhalb oder gleich einer vorbestimmten Grenze liegt, Erzeugen einer Ansage, die zumindest ein Wort aufweist, das dem gewählten Feld/den gewählten Feldern eines identifizierten Eintrags für eine positive oder negative Antwort entspricht;
(k) Identifizieren, bei Erhalt einer positiven Antwort, von Datenbankeinträgen, die mit den erkannten Antworten übereinstimmende Felder aufweisen und deren gewählte Felder mit den Wörtern oder Kombination von Wörtern übereinstimmen; und
(I) Wiederholen der Schritte (d) und (e) zumindest einmal;
(m) Beenden, bei Erhalt einer negativen Antwort für jedes derartige Wort oder alle derartigen Wörter, des Datenbankzugriffsverfahrens.

## Revendications

1. Dispositif d'accès à une base de données comprenant :
(a) une base de données (8) contenant des entrées comprenant chacune une pluralité de champs qui contiennent des représentations pour la machine d'éléments d'informations se rapportant à l'entrée, lesdites représentations formant un premier vocabulaire,
(b) un moyen d'annonce (4) répondant aux représentations pour la machine appartenant à un second vocabulaire de telles représentations pour générer des signaux audio représentant des annonces parlées,
(c) un moyen d'entrée (2) pouvant être mis en oeuvre pour recevoir des signaux et pour produire des représentations pour la machine de ceux-ci appartenant à un troisième vocabulaire de telles représentations, **caractérisé en ce qu'**il comprend en outre :
(d) un moyen de traduction (9, 10) définissant une relation entre le premier vocabulaire et le second vocabulaire et entre le premier vocabulaire et le troisième vocabulaire, et
(e) un moyen de commande (5) pouvant être mis en oeuvre
(i) pour générer, conformément à la relation définie, pour chaque représentation produite par le moyen d'entrée, une ou plusieurs représentations selon le premier vocabulaire,
(ii) pour identifier des entrées de base de données contenant les représentations générées,
(iii) pour examiner chaque représentation ou combinaison de représentations, qui est contenue dans un champ sélectionné ou une combinaison de champs sélectionnée, des entrées identifiées pour identifier une ou plusieurs de ces représentations ou combinaisons pouvant être distinguées, une représentation ou une combinaison pouvant être distinguée étant telle que, lorsqu'elle est traduite conformément à la relation définie en des représentations du second vocabulaire, elle diffère de toute autre telle représentation ou combinaison pouvant être distinguée lorsqu'elle est traduite d'une manière similaire,
(iv) commander le moyen d'annonce pour générer une annonce comprenant au moins un mot ou une combinaison de mots qui correspond ou correspondent à l'une des représentations ou combinaisons qui peuvent être distinguées.

2. Dispositif selon la revendication 1, dans lequel le moyen de commande peut être mis en oeuvre pour commander le moyen d'annonce afin de générer des annonces successives dont chacune comprend au moins un mot ou une combinaison de mots qui correspond ou correspondent à l'une des représentations ou combinaisons pouvant être distinguée, le moyen de commande pouvant être mis en oeuvre pour commander le moyen d'annonce afin de fournir en sortie les annonces dans un ordre de confiance séquentiel, la première annonce comprenant au moins un mot ou une combinaison de mots qui correspond ou correspondent à la représentation ou aux combinaisons qui peuvent être distinguées le plus probablement.

3. Dispositif selon la revendication 1 ou 2, dans lequel le moyen de commande peut être mis en oeuvre, à l'étape (iv), pour la ou chaque représentation ou combinaison pouvant être distinguées, pour générer, en utilisant le moyen de traduction, à partir de la représentation ou de la combinaison pouvant être distinguée, une représentation ou une combinaison dans le second vocabulaire et pour transmettre celle-ci au moyen d'annonces.

4. Dispositif selon la revendication 1 ou 2, dans lequel le moyen de commande peut être mis en oeuvre, à l'étape (iv), pour la ou chaque représentation ou combinaison pouvant être distinguée, pour transmettre au moyen d'annonces une représentation ou une combinaison dans le second vocabulaire, qui correspond, conformément à une relation définie par le moyen de traduction, à la représentation ou la combinaison pouvant être distinguée et qui a déjà été générée à l'étape (iii).

5. Dispositif selon l'une quelconque des revendications 1 à 4, dans lequel le moyen de commande peut être mis en oeuvre à l'étape (iv) pour générer une annonce demandant une confirmation du mot ou de la combinaison inclus et est en outre agencé, en fonctionnement :
(v) à la réception d'une réponse de confirmation, pour générer à partir d'une représentation ou d'une combinaison dans le second vocabulaire, qui correspond au mot ou aux mots inclus, une ou plusieurs représentations ou combinaisons conformément au premier vocabulaire et identifier les entrées ou une entrée de la base de données qui contient une telle représentation ou combinaison du ou des champs sélectionnés.

6. Dispositif selon l'une quelconque des revendications précédentes, dans lequel le moyen d'entrée est un dispositif de reconnaissance de la parole pouvant être mis en oeuvre pour recevoir des signaux audio.

7. Dispositif selon la revendication 6, dans lequel les second et troisième vocabulaires sont identiques.

8. Dispositif selon l'une quelconque des revendications précédentes, dans lequel les premier et troisième vocabulaires sont identiques.

9. Dispositif selon l'une quelconque des revendications précédentes, dans lequel au moins l'un du ou des champs sélectionnés est un champ dans lequel, à l'étape (ii), une représentation générée a été trouvée, et dans lequel un mot inclus à l'étape (iv) est un mot qui correspond à une représentation générée par le moyen d'entrée.

10. Dispositif selon l'une quelconque des revendications précédentes, comprenant en outre un vocabulaire intermédiaire et le moyen de traduction définissant les relations entre le premier vocabulaire et le vocabulaire intermédiaire, le second vocabulaire et le vocabulaire intermédiaire ainsi que le troisième vocabulaire et le vocabulaire intermédiaire.

11. Procédé d'accès à un système de base de données, ledit système de base de données comprenant une base de données contenant des entrées comprenant chacune une pluralité de champs qui contiennent les représentations pour la machine des éléments d'informations se rapportant à l'entrée, lesdites représentations formant un premier vocabulaire, un moyen d'annonces répondant à des représentations pour la machine, appartenant à un second vocabulaire de telles représentations pour générer des signaux audio représentant des annonces parlées, et un moyen d'entrée pouvant être mis en oeuvre pour recevoir des signaux et pour produire des représentations pour la machine appartenant à un troisième vocabulaire de telles représentations,
le procédé d'accès au système de base de données étant **caractérisé en ce qu'**il comprend :
(ii) la génération, conformément à une relation définie entre le premier vocabulaire et le troisième vocabulaire, pour chaque représentation produite par le moyen d'entrée, d'une ou de plusieurs représentations conformément au premier vocabulaire,
(ii) l'identification des entrées de base de données contenant les représentations générées,
(iii) l'examen de chaque représentation ou combinaison de représentations qui est contenue dans un champ sélectionné ou une combinaison de champs sélectionnée des entrées identifiées pour identifier une ou plusieurs de ces représentations ou combinaison pouvant être distinguée, une représentation ou une combinaison pouvant être distinguée étant telle que, lorsqu'elle est traduite conformément à la relation définie en représentations du second vocabulaire, elle diffère de toute autre telle représentation ou combinaison pouvant être distinguée lorsqu'elle est traduite d'une manière similaire, et
(iv) une commande du moyen d'annonces pour générer une annonce comprenant au moins un mot ou une combinaison de mots qui correspond ou correspondent à l'une des représentations ou combinaisons pouvant être distinguées.

12. Procédé selon la revendication 11, comprenant en outre, à l'étape (iv), la commande du moyen de sortie pour fournir en sortie une ou plusieurs annonces dans un ordre de confiance séquentiel, la première annonce comprenant au moins un mot ou une combinaison de mots, qui correspond à la représentation pouvant être distinguées la plus probable.

13. Procédé selon la revendication 11 ou 12, comprenant en outre :
(a) la génération d'au moins une annonce requérant une réponse,
(b) la reconnaissance de la ou des réponses,
(c) l'identification des entrées de base de données contenant des champs correspondant aux réponses reconnues,
(d) dans le cas où le nombre de telles entrées dépasse une limite prédéterminée, la génération d'une sortie contenant au moins un mot correspondant à un champ sélectionné d'une entrée identifiée pour une réponse positive ou négative,
(e) à la réception d'une réponse positive, l'identification des entrées de la base de données qui contiennent les champs correspondant aux réponses reconnues et dont les champs sélectionnés correspondent audit mot, et
(f) la répétition des étapes (d) et (e) au moins une fois.

14. Procédé selon la revendication 11 ou 12, comprenant les étapes suivantes consistant à :
(a) générer au moins une annonce requérant une réponse,
(b) reconnaître la ou les réponses,
(c) identifier les entrées de base de données contenant des champs correspondant à la ou aux réponses reconnues,
(d) dans le cas où le nombre de telles entrées est inférieur ou égale à une limite prédéterminée, générer une sortie présentant une ou plusieurs des entrées contenant chacune un ou plusieurs du ou des champs des entrées correspondantes, et sortir,
(e) dans le cas où le nombre de telles entrées dépasse une limite prédéterminée, pour un champ particulier ou une sélection de champs, examiner une représentation ou une sélection de représentations pouvant être distinguée qui est contenue dans le champ particulier ou la combinaison de champs des entrées identiques,
(f) dans le cas où le nombre de telles représentations ou combinaisons de représentation pouvant être distinguées est au-dessus d'une limite prédéterminée, répéter l'étape (e) en sélectionnant un autre champ ou une autre sélection de champs, conformément à un ordre prédéterminé, qui n'a pas déjà été pris en compte jusqu'à ce qu'aucun de tels champs ne reste à prendre en compte, et
(g) générer au moins une sortie requérant une réponse qui n'a pas déjà été demandée ni confirmée,
(h) reconnaître la ou les réponses,
(i) répéter l'étape (c) au moins une fois,
(j) dans le cas où le nombre de telles représentations ou combinaisons de représentations pouvant être distinguées est inférieur ou égal à une limite prédéterminée, générer une annonce contenant au moins un mot correspondant au champ sélectionné ou aux champs sélectionnés d'une entrée identifiée pour une réponse positive ou négative,
(k) à la réception d'une réponse positive, identifier des entrées de base de données qui contiennent des champs correspondant aux réponses reconnues et dont les champs sélectionnés correspondent auxdits mots ou combinaison de mots, et
(l) répéter les étapes (d) et (e) au moins une fois,
(m) à la réception d'une réponse négative pour la totalité d'un tel mot ou de tels mots, sortir de la méthode d'accès à la base de données.
